# EUROPÄISCHE PATENTSCHRIFT

(11) **EP 1 154 179 B1**
(45) Veröffentlichungstag und Bekanntmachung des Hinweises auf die Patenterteilung: **21.04.2004**
(21) Anmeldenummer: 01890101.7
(22) Anmeldetag: 29.03.2001
(51) Int. Cl.: F16K 27/00, F16K 31/46, F16K 31/08

(54) **Sicherheitsventil für eine Gasversorgungsleitung**
Safety valve for gas supply conduit
Soupape de sécurité pour un conduit d'alimentation en gaz

(30) Priorität: 28.04.2000 AT 7482000
(43) Veröffentlichungstag der Anmeldung: 14.11.2001
(73) Patentinhaber: Oberösterreichische Ferngas Aktiengesellschaft, 4030 Linz (AT)
(72) Erfinder: Spiess, Engelbert Dipl.-HTL. Ing., 4210 Gallneukirchen (AT)
(74) Vertreter: Hübscher, Helmut, Dipl.-Ing.

(56) Entgegenhaltungen:
- DE-A- 4 317 084
- US-A- 1 902 027
- US-A- 3 212 751
- US-A- 5 293 898
- PATENT ABSTRACTS OF JAPAN vol. 012, no. 418 (E-678), 7. November 1988 (1988-11-07) & JP 63 156306 A (MATSUSHITA ELECTRIC IND CO LTD), 29. Juni 1988 (1988-06-29)

## Beschreibung

Die Erfindung bezieht sich auf ein Sicherheitsventil für eine Gasversorgungsleitung mit einem in die Gasversorgungsleitung einsetzbaren, einen Ventilsitz aufweisenden Gehäuse, in dem ein Ventilstößel mit einem durch eine Öffnungsfeder gegen die Strömungsrichtung beaufschlagten Ventilteller axial verschiebbar gelagert ist.

Um bei einem Leitungsbruch einer Gasversorgungsleitung einen Gasaustritt zu unterbinden, werden insbesondere stromaufwärts bruchgefährdeter Leitungsabschnitte Sicherheitsventile eingebaut, die über die Druckdifferenz der Gasströmung vor und nach dem Sicherheitsventil gesteuert werden. Zu diesem Zweck ist es bekannt (WO 92/01184 A1), in die Gasversorgungsleitung ein rohrförmiges Gehäuse dichtend einzusetzen, das einen Ventilsitz für einen federbelasteten Ventilteller bildet, der über einen Ventilstößel axial verschiebbar im Gehäuse gelagert ist und in Gegenrichtung zur Gasströmung geöffnet wird. Da der Ventilteller über eine Öffnungsfeder beaufschlagt wird, deren Öffnungskraft an einen vorgegebenen Gasdurchsatz angepaßt ist, wird beim Überschreiten dieses Durchsatzes das Sicherheitsventil selbständig geschlossen, weil wegen des dann höheren Druckabfalls der auf den Ventilteller wirksame Differenzdruck die Kraft der Öffnungsfeder übersteigt. Solche vorzugsweise im Anschfußbereich einer Gasversorgungsleitung von Häusern an eine Gashauptleitung vorgesehene Sicherheitsventile stellen bei einem Bruch oder einer Beschädigung der Versorgungsteitung aufgrund des sich daraus ergebenden vergrößerten Gasdurchsatzes durch das Sicherheitsventil ein Absperren der Gasversorgungsleitung von der Gashauptleitung sicher. Nachteilig ist allerdings, daß nach einem Schließen des Sicherheitsventils der Ventilteller von der stromabwärts gelegenen Seite her mit einem Gegendruck zum anstehenden Betriebsdruck des Gases auf der stromaufwärts gelegenen Tellerseite beaufschlagt werden muß, damit der Ventilteller über die Öffnungsfeder geöffnet und anschließend wieder in der Offenstellung gehalten werden kann, solange der Druckabfall im Bereich des Sicherheitsventils den durch die Kraft der Öffnungsfeder vorgegebenen Grenzwert nicht übersteigt.

Der Erfindung liegt somit die Aufgabe zugrunde, ein Sicherheitsventil für eine Gasversorgungsleitung der eingangs geschilderten Art so auszugestalten, daß eine einfache Ventilbetätigung sichergestellt werden kann, ohne die Gasversorgungsleitung auf der stromabwärts des Sicherheitsventils gelegenen Seite mit einem Druckgas beaufschlagen zu müssen.

Die Erfindung löst die gestellte Aufgabe dadurch, daß der Ventilstößel über einen außerhalb der Gasversorgungsleitung vorgesehenen Stelltrieb magnetisch verstellbar ist.

Durch das Vorsehen eines Stelltriebes außerhalb der Gasversorgungsleitung, der den Ventilstößel des Sicherheitsventils magnetisch verlagert, werden vorteilhaften Voraussetzungen für eine Ventilbetätigung geschaffen, ohne eine Druckgasbeaufschlagung des Ventiltellers im Öffnungssinn vornehmen zu müssen. Die magnetische Verstellung des Ventilstößels vermeidet dabei Stellglieder, die die Gasversorgungsleitung durchsetzen, so daß sich wegen des Fehlens von gasdicht auszubildenden Durchführungen einfache Konstruktionsverhältnisse ergeben, die allen Sicherheitsanforderungen vorteilhaft entsprechen. Die magnetische Antriebsverbindung zwischen dem Ventilstößel und dem außerhalb der Gasversorgungsleitung vorgesehenen Stelltrieb kann nicht nur zum Öffnen des Sicherheitsventils nach einem Rohrbruch, sondern auch zum Schließen des Sicherheitsventils dienen, was unter Umständen sonst erforderliche, von Hand betätigbare Absperrventile für die Gasversorgungsleitung erübrigt.

Um eine in beiden Stellrichtungen des Ventilstößels wirksame Antriebsverbindung zwischen dem Stelltrieb und dem Ventilstößel über eine magnetische Kopplung mit einfachen Mitteln zu erreichen, kann der Stelltrieb ein mit einem Permanentmagneten des Ventilstößels zusammenwirkendes, umpolbares Magnetfeld aufweisen, so daß in der einen Magnetfeldausrichtung der Ventilstößel angezogen und in der anderen abgestoßen wird. Wird im Zusammenhang mit dem Stelltrieb ebenfalls ein Permanentmagnet eingesetzt, so ist dieser zur Umpolung des Magnetfeldes entsprechend zu drehen.

Der Stelltrieb zur magnetischen Verstellung des Ventilstößels kann je nach Anwendungsfall sehr unterschiedlich aufgebaut sein, weil es ja lediglich darum geht, den Ventilstößel im oder entgegen dem Sinn der Öffnungsfeder zu verlagern. Besonders einfache Konstruktionsverhältnisse ergeben sich allerdings, wenn das Gehäuse des Sicherheitsventils im Anschlußbereich eines Winkelstückes der Gasversorgungsleitung vorgesehen ist, an das der Stelltrieb in axialer Verlängerung des Ventilstößels anschließt, weil in diesem Fall der Stelltrieb aus einer in Richtung des Ventilstößels verschiebbaren, vorzugsweise in einem Führungsrohr vorgesehenen Stellstange bestehen kann, die an ihrem dem Ventilstößel zugekehrten Ende einen Permanentmagnet trägt. Zur Betätigung des Sicherheitsventils braucht somit lediglich die Stellstange des Stelltriebes mit dem endseitigen Permanentmagneten gegen den Ventilstößel vorgeschoben zu werden, was auch eine einfache Handbetätigung erlaubt.

In der Zeichnung ist der Erfindungsgegenstand beispielsweise dargestellt. Es zeigen
- Fig. 1: ein erfindungsgemäßes Sicherheitsventil für eine Gasversorgungsleitung in einem schematischen Axialschnitt in der Offenstellung,
- Fig. 2: dieses Sicherheitsventil in der Schließstellung und
- Fig. 3: ein erfindungsgemäßes Sicherheitsventil in einem Einbaubeispiel.

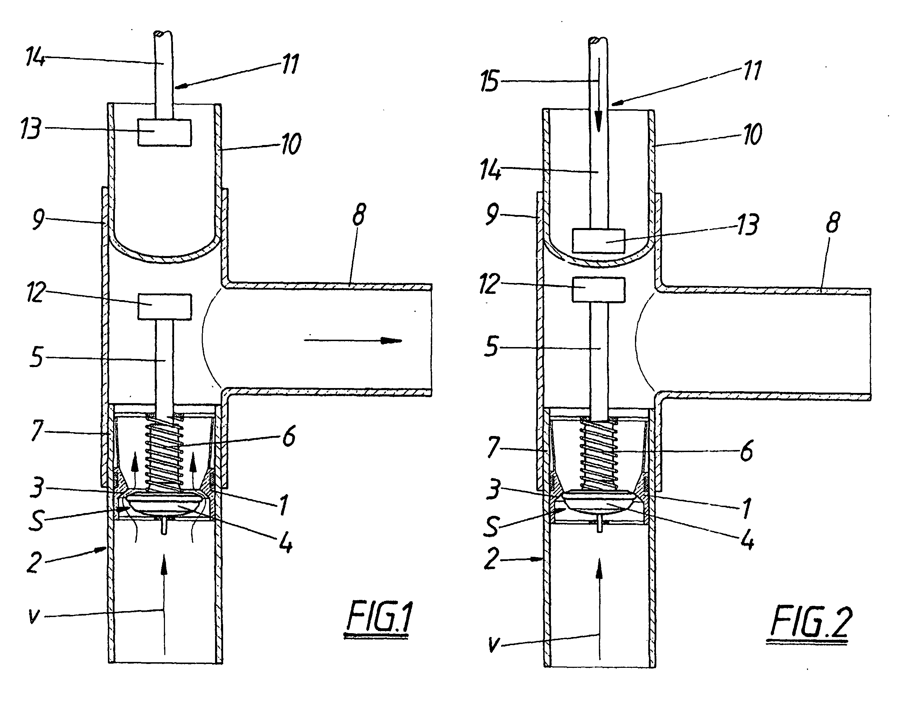

Gemäß den Fig. 1 und 2 weist das dargestellte Sicherheitsventil S ein rohrförmiges Gehäuse 1 auf, das gasdicht in eine Gasversorgungsleitung 2 eingesetzt ist und einen Ventilsitz 3 für einen Ventilteller 4 bildet, der über einen Ventilstößel 5 axial verschiebbar im Gehäuse 1 gelagert ist und mit Hilfe einer Öffnungsfeder 6 entgegen der Strömungsrichtung v beaufschlagt wird. Wie die Fig. 1 und 2 erkennen lassen, ist das Gehäuse 1 bevorzugt in das stirnseitige Anschlußende 7 eines an ein Winkelstück 8 angeschlossenen Leitungsabschnittes eingesetzt, das als T-förmiges Formstück ausgebildet ist, dessen in Verlängerung des Anschlußendes 7 verlaufender Ansatz 9 durch einen Halterungsanschluß 10 für einen Stelltrieb 11 gasdicht verschlossen ist. Der in den Bereich des Ansatzes 9 vorstehende Ventilstößel 5 trägt an seinem Ende einen Permanentmagnet 12, der mit einem Permanentmagneten 13 auf einer Stellstange 14 des Stelltriebes 11 zusammenwirkt.

In der in der Fig. 1 gezeichneten Offenstellung des Sicherheitsventils S hält die Öffnungsfeder 6 den Ventilteller 4 in einer anschlagbegrenzten Offenstellung. Der sich im Bereich des Sicherheitsventils S einstellende Druckabfall darf daher auf den Ventilteller 4 lediglich eine Kraft bewirken, die kleiner als die Kraft der Öffnungsfeder 6 ist. Die Kraft der Öffnungsfeder 6 muß jedoch nach oben begrenzt und auf einen größten zulässigen Gasdurchsatz begrenzt werden, damit beim Überschreiten dieses Gasdurchsatzes beispielsweise zufolge eines Leitungsbruches stromabwärts des Sicherheitsventils der dann vergrößerte Differenzdruck auf den Ventilteller 4 dessen Schließung entgegen der Öffnungsfeder 6 bedingt. Da in der Schließstellung nach der Fig. 2 dem Gasbeaufschlagungsdruck lediglich die Kraft der Öffnungsfeder 6 entgegenwirken kann, bleibt das Sicherheitsventil geschlossen, bis der Ventilteller 4 im Sinne der Öffnungsfeder 6 zusätzlich beaufschlagt wird. Diese zusätzliche Beaufschlagung des Ventiltellers 4 erfolgt erfindungsgemäß über den Stelltrieb 11, der mit dem Ventilstößel 5 magnetisch gekoppelt ist. Da die Permanentmagneten 12 und 13 auf ihren einander zugekehrten Seiten gleichnamige Pole aufweisen, ergibt sich zwischen den Permanentmagneten 12 und 13 eine abstoßende Kraft, die beim Vorschieben der Stellstange 14 in Richtung des Pfeiles 15 ein Öffnen des Sicherheitsventils S nach sich zieht. Ist der Druckabfall im Bereich des Sicherheitsventils S wieder auf den zulässigen Bereich begrenzt, so wird der Ventilteller 4 über die Öffnungsfeder 6 in der Offenstellung gehalten, wenn die Stellstange 14 in die Ausgangslage nach der Fig. 1 zurückgezogen wird.

Bei einer Umpolung des magnetischen Feldes des Stelltriebes 11 kann der Ventilteller 4 auch gegen die Kraft der Öffnungsfeder 6 bei einem zulässigen Druckabfall geschlossen werden, was wohl nicht näher erklärt zu werden braucht. In diesem Fall ist lediglich dafür zu sorgen, daß der dem Permanentmagneten 12 zugekehrte Pol des Permanentmagneten 13 ungleichnamig zum wirksamen Pol des Permanentmagneten 12 ist, so daß sich die beiden Permanentmagneten 12, 13 anziehen.

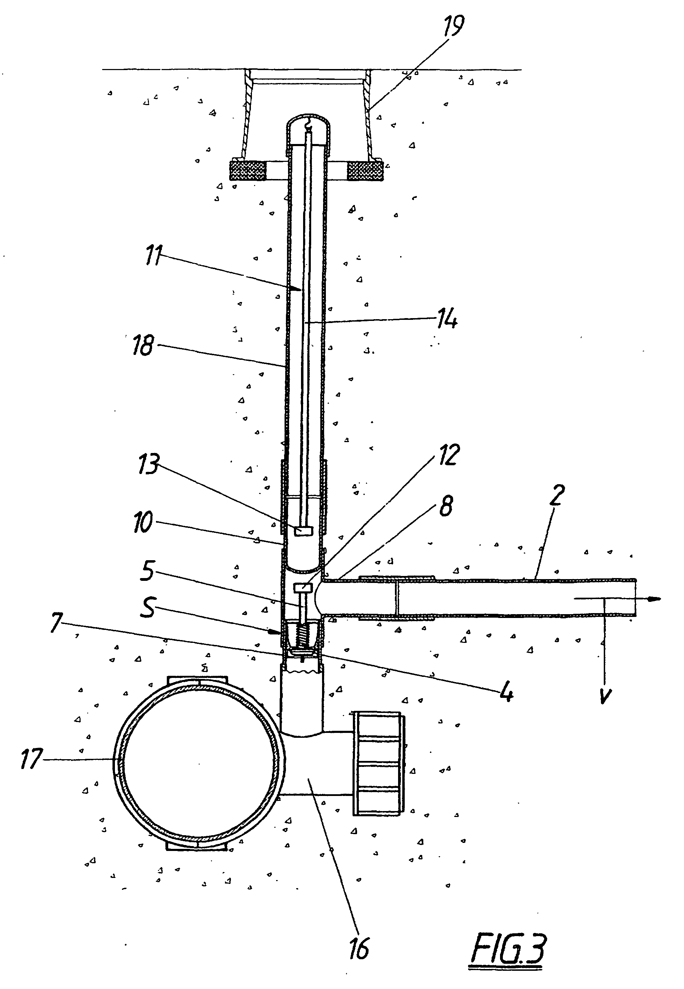

Wie der Fig. 3 entnommen werden kann, ist das Sicherheitsventil S im Bereich einer Anbohrarmatur 16 einer Gashauptleitung 17 eingebaut, von der die Gasversorgungsleitung 2 zu einem Hausanschluß abzweigt. Das Sicherheitsventil S ist dabei in einem vertikalen Anschlußende 7 der Anbohrarmatur 16 vorgesehen, so daß an den Halterungsanschluß 10 des Winkelstückes 8 ein nach oben verlaufendes Führungsrohr 18 für die Stellstange 14 des Stelltriebes 11 angesetzt werden kann. Da dieses Führungsrohr 18 in einem Oberflächenschacht 19 mündet, kann das Sicherheitsventil S vom Oberflächenschacht 19 her über den Stelltrieb 11 betätigt werden, und zwar je nach Wahl der wirksamen Magnetpole im Öffnungs- oder Schließsinn. Die Stellstange 14 braucht dabei nicht zwangsläufig ausgewechselt zu werden, wenn für eine Wendeeinrichtung des Permanentmagneten 13 vorgesorgt ist.

Es braucht wohl nicht besonders hervorgehoben zu werden, daß die Erfindung nicht auf das dargestellte Ausführungsbeispiel beschränkt ist, weil sehr unterschiedliche Stelltriebe 11 für den Ventilstößel 5 zum Einsatz kommen können. Es ist ja lediglich sicherzustellen, daß zwischen dem Stelltrieb 11 und dem Ventilstößel 5 eine magnetische Antriebsverbindung wirksam wird, um bei einer Betätigung des Stelltriebes 11 das Sicherheitsventil S zu öffnen bzw. zu schließen. Dies bedeutet, daß die Gasversorgungsleitung 2 und das Winkelstück 8 keine magnetische Abschirmung mit sich bringen dürfen. Bei den im allgemeinen verlegten Kunststoffleitungen ist diese Bedingung von vornherein erfüllt.

## Patentansprüche

1. Sicherheitsventil (S) für eine Gasversorgungsleitung (2) mit einem in die Gasversorgungsleitung (2) einsetzbaren, einen Ventilsitz (4) aufweisenden Gehäuse (1), in dem ein Ventilstößel (5) mit einem durch eine Öffnungsfeder (6) gegen die Strömungsrichtung (v) beaufschlagten Ventilteller (4) axial verschiebbar gelagert ist, **dadurch gekennzeichnet, daß** der Ventilstößel (5) über einen außerhalb der Gasversorgungsleitung (2) vorgesehenen Stelltrieb (11) magnetisch verstellbar ist.

2. Sicherheitsventil nach Anspruch 1, **dadurch gekennzeichnet, daß** der Stelltrieb (11) ein mit einem Permanentmagnet (12) des Ventilstößels (5) zusammenwirkendes, umpolbares Magnetfeld aufweist.

3. Sicherheitsventil nach Anspruch 1 oder 2, **dadurch gekennzeichnet, daß** das Gehäuse (1) im Anschlußbereich eines Winkelstückes (8) der Gasversorgungsleitung (2) vorgesehen ist, an das der Stelltrieb (11) in axialer Verlängerung des Ventilstößels (5) anschließt.

4. Sicherheitsventil nach Anspruch 3, **dadurch gekennzeichnet, daß** der Stelltrieb (11) aus einer in Richtung des Ventilstößels (5) verschiebbaren, vorzugsweise in einem Führungsrohr (18) vorgesehenen Stellstange (14) besteht, die an ihrem dem Ventilstößel (5) zugekehrten Ende einen Permanentmagnet (13) trägt.

## Claims

1. A safety valve (S) for a gas supply line (2) with a housing (1) which is insertable into the gas supply line (2) and which has a valve seat (4) and in which a valve rod (5) with a valve disc (4) biased by an opening spring (6) against the direction of flow (v) is mounted to be axially displaceable, **characterised in that** the valve rod (5) is magnetically adjustable via a an adjusting drive (11) provided outside the gas supply line (2).

2. A safety valve according to claim 1, **characterised in that** the adjusting drive (11) comprises a polarity-reversible magnetic field cooperating with a permanent magnet (12) of the valve rod (5).

3. A safety valve according to claim 1 or 2, **characterised in that** the housing (1) is provided in the zone of connection of an angle member (8) of the gas supply line (2) adjoining the adjusting drive (11) in axial extension of the valve rod (5).

4. A safety valve according to claim 3, **characterised in that** the adjusting drive (11) consists of an adjusting rod (14) displaceable in the direction of the valve rod (5) and provided preferably in a guide tube (18) and bearing a permanent magnet (13) at its end facing the valve rod (5).

## Revendications

1. Soupape de sécurité (S) pour un conduit d'alimentation en gaz (2), avec un boîtier (1) susceptible d'être inséré dans le conduit d'alimentation en gaz (2), présentant un siège de soupape (4), boîtier dans lequel un poussoir de soupape (5), muni d'un plateau de soupape(4), sollicité à l'encontre de la direction d'écoulement (v) au moyen d'un ressort d'ouverture (6), est monté de façon déplaçable axialement, **caractérisée en ce que** le poussoir de soupape (5) est manoeuvrable magnétiquement, par l'intermédiaire d'un entraînement d'asservissement (11), prévu à l'extérieur du conduit d'alimentation en gaz (2).

2. Soupape de sécurité selon la revendication 1, **caractérisée en ce que** l'entraînement d'asservissement (11) présente un champ magnétique à polarité inversible, coopérant avec un aimant permanent (12) du poussoir de soupape (5).

3. Soupape de sécurité selon la revendication 1 ou 2, **caractérisée en ce que** le boîtier (1) est prévu dans la zone de raccordement d'une pièce d'angle (8) du conduit d'alimentation en gaz (2), pièce d'angle à laquelle l'entraînement d'asservissement (11) se raccorde, dans le prolongement axial du poussoir de soupape (5).

4. Soupape de sécurité selon la revendication 3, **caractérisée en ce que** dans l'entraînement d'asservissement (11) est formé d'une barre de réglage (14), déplaçable dans la direction du poussoir de soupape (5), de préférence prévue dans un tube de guidage (18), barre de réglage portant un aimant permanent (13) sur son extrémité tournée vers le poussoir de soupape (5).
